# EUROPEAN PATENT APPLICATION

(11) **EP 2 857 297 A1**
(43) Date of publication of application: **08.04.2015**
(21) Application number: 14382025.6
(22) Date of filing: 28.01.2014
(51) Int. Cl.: B62J 1/12, B60N 2/56, B60N 2/58, B60N 2/00, B62J 33/00

(54) **Heating device for motorcycle seats**

(30) Priority: 07.10.2013 ES 201331143 U
(71) Applicant: NAD, S.L., 08100 Mollet del Vallès (ES)
(72) Inventor: Ayala Gonzalez, Pedro, 08100 MOLLET DEL VALLES (ES)
(74) Representative: Oficina Ponti, SLP

(57) **Abstract**

Heating device for motorcycle seats, of the type applicable to seats (1) provided with a foam cushion (2), preferably moulded polyurethane foam, and an outer upholstery (3). Said heating device comprises at least one layer of flexible heating fabric (4) arranged between the foam cushion (2) and the outer upholstery (3) of the seat (1), said layer of heating fabric (4) including a plurality of metallic fibres capable of acting as an electrical heating resistance, and electrical connection means (5) provided for transmitting the electrical current to said layer of heating fabric (4). The invention provides a heating device that is structurally simple, safe and more energy efficient.

## Description

The present invention relates to a heating device for motorcycle seats, whether the motorcycle has one seat or two.

### Background of the invention

Motorcycle seats are almost exclusively formed by a rigid base made of plastic or metal which is joined mechanically to the motorcycle frame, foam, normally made of moulded flexible polyurethane, and a sheet of waterproof upholstery, generally consisting of flexible and elastic fabric covered in a sheet that is also made of flexible and elastic plastic (such as PVC, PU, etc).

Traditionally, motorcycle seats with heating make use of a heating element, such as an electrical resistance which consists of a cable that may be made of different materials (copper, nicrom, stainless steel, aluminium, etc.) distributed and glued to a support sheet that is placed on the seat foam or cushion in a zone that is normally in contact with the rider's body and protected with one or more layers of flexible material in order to distribute the heat. This helps to avoid having very hot spots in the areas near the cable, and also prevents the shape of the cable from showing through on the surface of the upholstery. This support sheet with the electrical resistance is situated between the foam cushion and the upholstery.

However, this heating system has a series of drawbacks, which are described below:
- The electrical resistance cable must be very flexible and may easily break as a result of fatigue.
- This type of cable is expensive.
- Upholstery operations are complex, due to having to add the heating element with its connections and one or several layers of flexible material.
- The flexible material of the added layers is insulating, meaning that speed of response and energy is lost.
- If the same seat model can be manufactured with or without heating, the number of moulds doubles, implying a higher cost.
- By adding layers of flexible material to the upholstery, the seat's original design is deformed and loses its original appearance over time.

Utility model ES1076120, of the same applicant as the present invention, discloses a motorcycle seat that also includes a heating resistance consisting of a metal wire or cable covered by an insulating element. This system helps to solve the problems mentioned above thanks to the fact that the heating resistance is overmoulded in the polyurethane foam that makes up the seat cushion.

In this way, integration of the electrical resistance into the polyurethane foam makes it possible to achieve the shapes and finishes required for the cushion, which cannot be formed using other known systems because they have outer layers of upholstery fabric that cannot be appropriately shaped and that modify the original profile of the cushion, especially when the corners are rounded.

Nevertheless, this system of the electrical resistance integrated into the foam presents the drawback that the manufacturing tools and foaming process are more complex, and also includes the insulating layer between the resistance and the outer surface, although at the same time the problems with the upholstery and deformation of the design are avoided. This implies an increase in costs and a worse temperature response.

On the other hand, in order to achieve an average surface temperature of 38°C the wire or cable has to reach 60°C, which implies a reheating of the foam which therefore loses its properties more quickly.

Moreover, if the cable breaks in the best of cases the heating system ceases to function, but it can lead to sparking and burn the foam that envelops it.

Other known systems used for heating seats or other car parts or for domestic uses are not applicable to motorcycle seats due to the enormous strain suffered by the upholstery and the low electrical power available in these vehicles, with an operating voltage of normally 12 V.

### Description of the invention

The objective of the heating device for motorcycle seats of the present invention is to overcome the drawbacks presented by the devices known in the state of the art, by providing a heating device that is structurally simple, safer and more energy-efficient.

The heating device for motorcycle seats, object of the present invention, is of the type applicable to seats provided with a foam cushion, preferably moulded polyurethane foam, and an outer upholstery, and is characterised in that said heating device comprises at least one layer of flexible heating fabric arranged between the foam cushion and the outer upholstery of the seat, said layer of heating fabric including a plurality of metallic fibres capable of acting as an electrical heating resistance, and electrical connection means provided for transmitting the electrical current to said layer of heating fabric.

The fact of using a layer of fabric provided with metallic fibres, instead of an electrical resistance as occurred in the case of known devices, provides a series of benefits which are described below:
- The same tools can be used to manufacture seats with heating or without heating, since neither the foam of the cushion nor the upholstery of the seat need to be modified, which therefore reduces the costs.
- There are no problems due to lack of flexibility or breaking of the cable.
- Upholstery operations are made simpler.
- The protective layers of flexible material that are used with the electrical resistances of the devices known in the state of the art are eliminated or minimised.
- The speed of the response and energy efficiency increases.
- The design of the shape of the seat is not limited or deformed.
- It is possible to design for different power ratings.
- Safety increases if the motorcycle remains switched on without the rider (in the garage, while pre-heating in cold zones, etc.)
- The maximum temperature that the seat/foam must withstand decreases considerably meaning that durability, thermal comfort and energy efficiency are improved.
- It distributes the heat more uniformly and efficiently, avoiding hot spots.

Advantageously, the electrical connection means comprise a flat twisted cable, or other appropriate conductor material, sewn into or glued onto each side of the layer of flexible heating fabric.

In this way, the power consumed can be modified by varying the length of the connection cables (electrodes) or the distance between them, thereby increasing or decreasing the required temperature, as well as the area to be heated.

According to a first preferred embodiment of the invention, the layer of flexible heating fabric is glued onto the surface of the foam cushion.

Advantageously, the layer of flexible heating fabric is covered by a protective film provided for stabilising its dimensions and improving its insulation.

Preferably, the heating device also includes an intermediate sheet of flexible material, preferably polyurethane foam or similar, arranged between the layer of flexible heating fabric and the outer upholstery, provided for hiding the seams and finishes of the piece.

Preferably, the electrical connection means are housed inside seams made in the foam cushion. Therefore, in this embodiment it is not necessary to have decorative seams on the outer upholstery.

According to a second preferred embodiment of the invention, the layer of flexible heating fabric is arranged as a sheet on the internal face of the outer upholstery.

Therefore, a single integrated layer is obtained which avoids the appearance of wrinkles, bulges or marks due to changes of the material, meaning that no additional layer is necessary as occurs in the case of the first embodiment.

Preferably, the electrical connection means are housed inside decorative seams of the outer upholstery.

Preferably, in this embodiment, the layer of flexible heating fabric includes a waterproof finish.

According to another aspect of the invention, the electrical resistance of the layer of flexible heating fabric is variable according to the pressure exerted on said layer, with the electrical resistance being greater the lesser the pressure, and is therefore capable of acting as a presence detector.

Said layer of heating fabric presents the technical feature of that its electrical resistance increasing very much if no pressure is exerted on said layer, meaning that if the motorcycle rider leaves the seat, electricity consumption will decrease considerably, resulting in a safety feature and energy saving. Also, said technical feature makes it possible to control the presence of the rider by means of suitable electronic control means provided with a presence detector for managing the motorcycle's driving force. In this way, a single product with two functions is obtained, heating and presence detection.

### Brief description of the drawings

In order to facilitate the description of what is set out above, drawings are attached which, schematically and by way of a non-limiting example, represent two practical cases of embodiments of the heating device for motorcycle seats of the invention, wherein:
figure 1 is a schematic plan view of the seat, showing the internal location of the layer of flexible heating fabric and the electrical connection means, according to a first embodiment of the invention;
figure 2 is a cross-section of the seat, according to line II-II of figure 1;
figure 3 is an enlarged detail of the location of the cable according to figure 2;
figure 4 is a schematic plan view of the seat, showing the internal location of the layer of flexible heating fabric and the electrical connection means, according to a second embodiment of the invention;
figure 5 is a cross-section of the seat, according to line V-V of figure 4; and
figure 6 is an enlarged detail of the location of the cable according to figure 5.

### Description of preferred embodiments

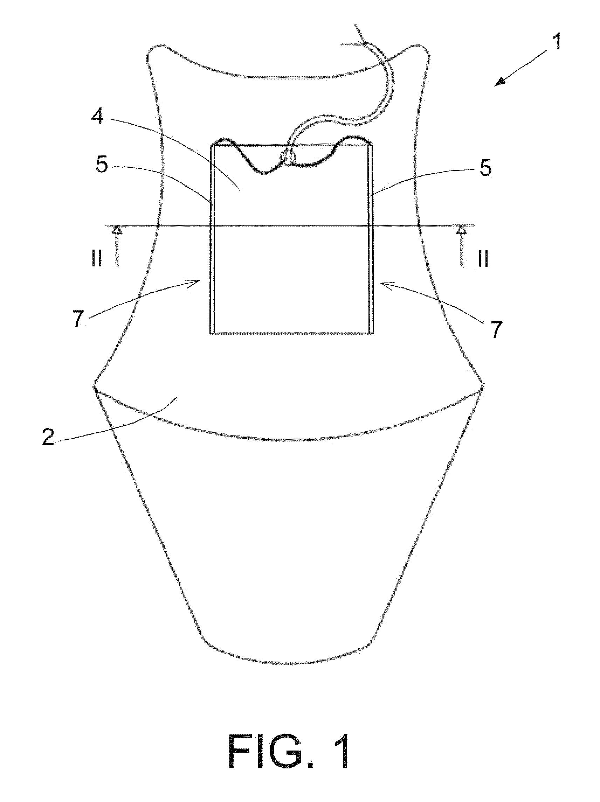

Figures 1 to 3 represent a first embodiment of the invention. The heating device for motorcycle seats 1 is of the type applicable to seats 1 provided with a moulded polyurethane foam cushion 2 and outer upholstery 3.

The heating device comprises a layer of flexible heating fabric 4 arranged between the foam cushion 2 and the outer upholstery 3 of the seat 1, said layer of heating fabric 4 including a plurality of metallic fibres capable of acting as an electrical heating resistance, and electrical connection means 5 provided for transmitting the electrical current to said layer of heating fabric 4.

Said electrical connection means 5 include a flat twisted cable sewn into or glued onto each side of the layer of flexible heating fabric 4.

In this way, the power consumed may be altered by varying the length of the connection cables (electrodes) or the distance between them, thereby increasing or decreasing the required temperature, in addition to the area to be heated.

In this first embodiment, the layer of flexible heating fabric 4 is glued onto the surface of the foam cushion 2, and is covered by a protective film provided for stabilising its dimensions and improving its insulation.

Moreover, an intermediate sheet 6 of flexible material is included, preferably made of polyurethane foam or similar, arranged between the layer of flexible heating fabric 4 and the outer upholstery 3, provided for hiding the seams and finishes of the piece.

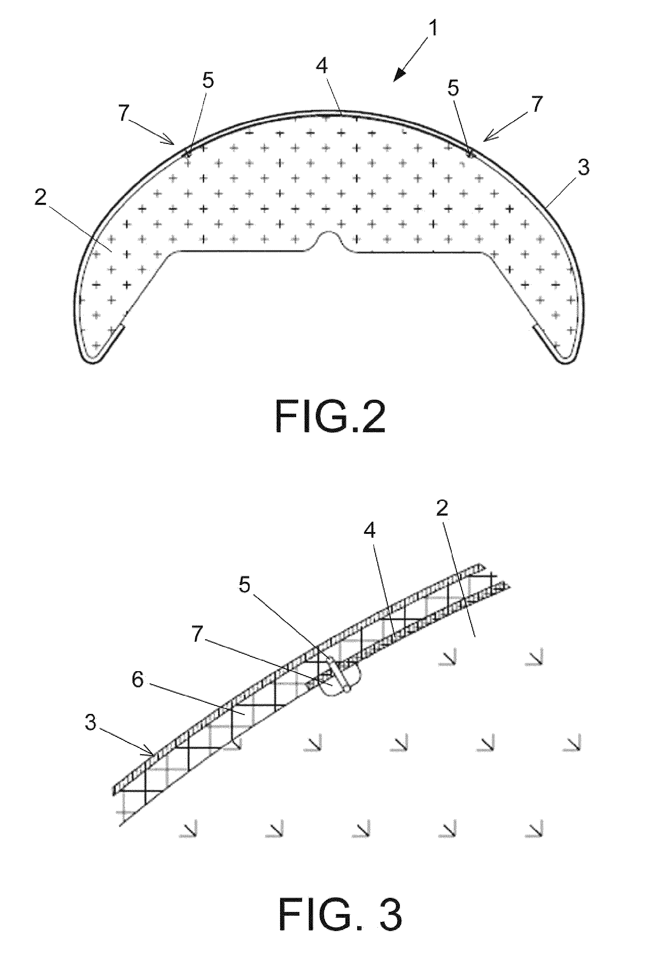

In this case, the electrical connection means 5 are housed inside seams 7 made in the foam cushion 2, as may be observed in greater detail in figure 3.

It is important to note that in this embodiment it is not necessary to have decorative seams on the outer upholstery 3.

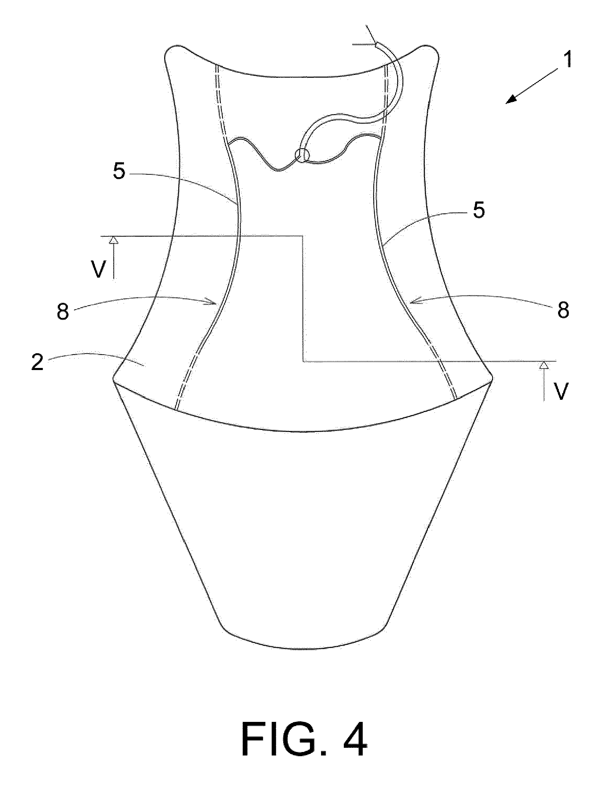

Figures 4 to 6 represent a second embodiment of the invention. In this case, the heating device comprises the same elements as numerical references 1 to 5 of the first embodiment. The difference lies in the fact that the layer of flexible heating fabric 4 is arranged as a sheet on the internal face of the outer upholstery 3.

Therefore, a single integrated layer is obtained which prevents the appearance of wrinkles, bulges or marks due to changes in the material, meaning that no additional layer is necessary as occurs in the case of the first embodiment.

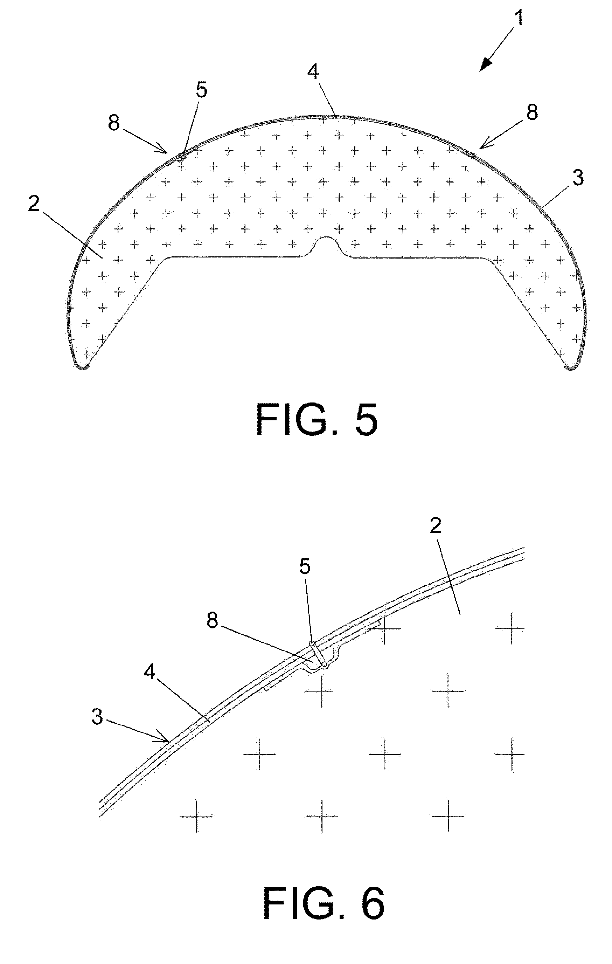

On the other hand, the electrical connection means 5 are housed inside decorative seams 8 of the outer upholstery 3. In figure 4 the dotted line shows the areas of the seams 8 without electrical cable 5 and the solid line shows the areas where the electrical cables 5 are. In figure 6, it is possible to appreciate an enlarged detail of the housing of the cable 5 within the outer upholstery 3.

At the same time, in this second embodiment, the layer of flexible heating fabric 4 may include a waterproof finish.

According to another aspect of the invention, the electrical resistance of the layer of flexible heating fabric 4 is variable according to the pressure exerted on said layer, with the electrical resistance being greater the lesser the pressure, and is therefore capable of acting as a presence detector.

Said layer of heating fabric 4 presents the technical feature of that its electrical resistance increasing very much if no pressure is exerted on said layer, meaning that if the motorcycle rider leaves the seat 1, electricity consumption will decrease considerably, resulting in a safety feature and energy saving. Also, said technical feature makes it possible to control the presence of the rider by means of suitable electronic control means provided with a presence detector for managing the motorcycle's driving force. In this way, a single product with two functions is obtained, heating and presence detection.

Although reference has been made to a specific embodiment of the invention, it is obvious to the person skilled in the art that the heating device for motorcycle seats described can undergo numerous variations and modifications, and that all the details mentioned may be replaced by others which are technically equivalent without falling outside the scope of protection defined by the attached claims.

## Claims

1. Heating device for motorcycle seats, of the type applicable to seats (1) provided with a foam cushion (2), preferably moulded polyurethane foam, and an outer upholstery (3), **characterised in that** said heating device comprises at least one layer of flexible heating fabric (4) arranged between the foam cushion (2) and the outer upholstery (3) of the seat (1), said layer of heating fabric (4) including a plurality of metallic fibres capable of acting as an electrical heating resistance, and electrical connection means (5) provided for transmitting the electrical current to said layer of heating fabric (4).

2. Device, according to claim 1, wherein the electrical connection means (5) comprise a flat twisted cable, or other appropriate conductor material, sewn into or glued onto each side of the layer of flexible heating fabric (4).

3. Device, according to claim 1 or 2, wherein the layer of flexible heating fabric (4) is glued onto the surface of the foam cushion (2).

4. Device, according to claim 3, wherein the layer of flexible heating fabric (4) is covered by a protective film provided for stabilising its dimensions and improving its insulation.

5. Device, according to claim 3, wherein further it includes an intermediate sheet (6) of flexible material, preferably polyurethane foam or similar, arranged between the layer of flexible heating fabric (4) and the outer upholstery (3), provided for hiding the seams and finishes of the piece.

6. Device, according to claim 3, wherein the electrical connection means (5) are housed inside seams (7) made in the foam cushion (2).

7. Device, according to claim 1 or 2, wherein the layer of flexible heating fabric (4) is arranged as a sheet on the internal face of the outer upholstery (3).

8. Device, according to claim 7, wherein the electrical connection means (5) are housed inside decorative seams (8) of the outer upholstery (3).

9. Device, according to claim 7, wherein the layer of flexible heating fabric (4) includes a waterproof finish.

10. Device, according to claim 1, wherein the electrical resistance of the layer of flexible heating fabric (4) is variable according to the pressure exerted on said layer, with the electrical resistance being greater the lesser the pressure, and is therefore capable of acting as a presence detector.
